# EUROPEAN PATENT SPECIFICATION

(11) **EP 3 012 451 B1**
(45) Date of publication and mention of the grant of the patent: **10.04.2019**
(21) Application number: 15190617.9
(22) Date of filing: 20.10.2015
(51) Int. Cl.: F03G 7/08, E01B 26/00, H02K 7/02, H02K 7/18

(54) **KINETIC ENERGY COLLECTOR MECHANISM TO GENERATE ELECTRIC POWER FROM PASSING VEHICLES, USING A MAIN AXLE CONNECTED TO A FLYWHEEL**
KINETISCHER ENERGIEKOLLEKTORMECHANISMUS ZUR ERZEUGUNG VON ELEKTRISCHER ENERGIE AUS VORBEIFAHRENDEN FAHRZEUGEN MIT EINER MIT EINEM SCHWUNGRAD VERBUNDENEN HAUPTACHSE
MÉCANISME COLLECTEUR D'ÉNERGIE CINÉTIQUE POUR GÉNÉRER DE L'ÉNERGIE ÉLECTRIQUE À PARTIR DE VÉHICULES QUI PASSENT, À L'AIDE D'UN ESSIEU PRINCIPAL CONNECTÉ À UN VOLANT

(30) Priority: 20.10.2014 AR P140103925
(43) Date of publication of application: 27.04.2016
(73) Proprietor: Diaz, Hugo Roberto, Resistencia-Chaco (AR)
(72) Inventor: Diaz, Hugo Roberto, Resistencia-Chaco (AR)
(74) Representative: Carvajal y Urquijo, Isabel

(56) References cited:
- WO-A1-2010/088306
- US-A- 4 238 687
- US-A1- 2010 051 389

## Description

### Field of the Invention

The present invention refers to the field of electric power generators, particularly to those generators that do not pollute the environment and also use alternative sources of energy.

### II - Background of the invention

Power consumption has increased rapidly during recent years.

In the United States and in other developed countries, for example, the increased number of hybrid/electrical vehicles has increased the need to build more power plants.

The present invention is considered to be included in the general category of renewable power sources, such as, but not limited to, windpower systems, hydroelectric power systems, solar power systems, and gravitational power systems, in all of which the source of energy is basically free of cost.

Document US4238687-A discloses a kinetic energy collector system for generating power from the passage of motor vehicles over a roadway. However, this system is bulky and difficult to install.

In the context of mechanically-driven power systems, the mass and the kinetic energy / impulse from the motion of vehicles on a road, for example cars and trucks, or on a railway, for example, trains or underground trains, are a free source of energy that can be used and also potentially stored for further consumption.

### III-Summary of the invention

It is then the object of the present invention, to provide a kinetic energy collector mechanism for generating electric power from passing vehicles, comprising a main axle connected to a flywheel, wherein the main axle is supported on two bearings and/or rollers, said main axle adapted to rotate by an angle ranging between 0°and 120° preferably 45° (which is equivalent to 1/8th of a complete turn of the axle), as the vehicle wheels pass over the main axle, thus driving the attached flywheel; wherein, the main axle is returned to its original resting position under the action of springs; and wherein the flywheel is configured to drive a generator by mechanical means, transmitting the load to said generator, which in turn generates electric power that will be either fed into a network or charged on batteries. The flywheel is mounted so as to transmit load in only one direction and to rotate freely in the opposite direction. The main axle has a half-cylindrical section, the flat side of which is arranged so that the vehicle wheels step thereon. The flywheel is attached to an end of the main axle.

Also preferably, the main axle is connected to an additional flywheel at its other end.

Most preferably, the generator is a dynamo, an alternator, or a combination thereof.

More preferably, the mechanical means transmitting the load are belt and pulley systems, gears, or a combination thereof.

In a more preferred embodiment, the kinetic energy collector mechanism is mounted on a street or road with the main axle located between two platforms with an upward or downward inclination and fixed to the ground surface.

In another preferred embodiment, the kinetic energy collector mechanism it is mounted on a railway section.

### IV - Brief description of the Figures

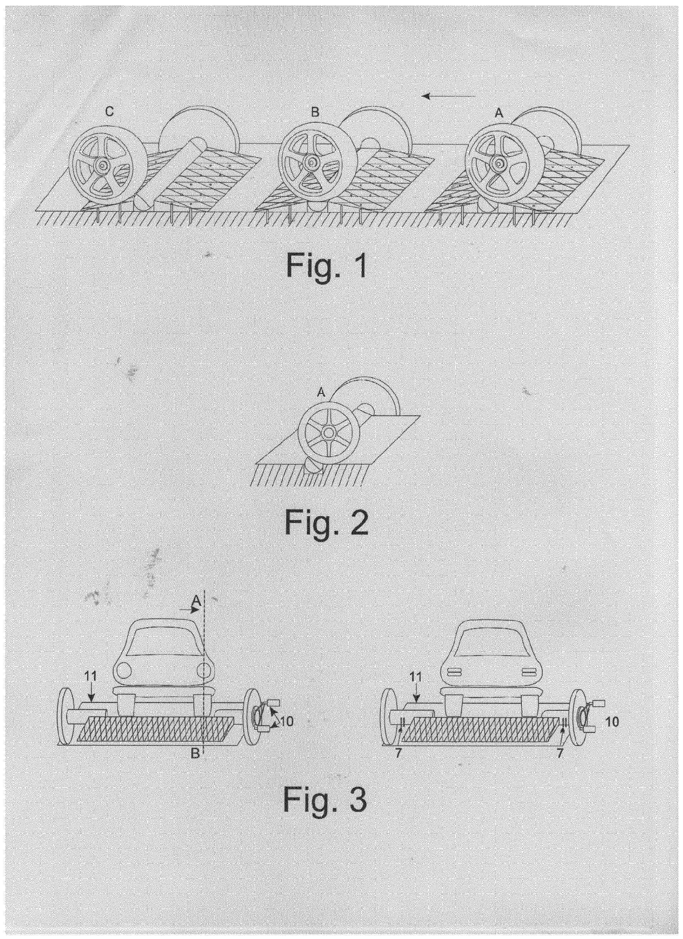

Figure 1 is a diagram of a preferred embodiment of the mechanism according to the present invention, where three stages (A, B y C) are shown from right to left as a vehicle wheel (shown at the front) runs over the mechanism and drives an axle with a half-cylindrical cross section, which in turn drives a flywheel (shown behind it). At A, the vehicle wheel contacts the half-cylindrical axle at the top of an upward inclined platform. At B, the axle has started to rotate, thus driving the flywheel as the vehicle wheels pass from the upward platform to a downward platform. At C, the vehicle wheels start running along the downward platform, while the flywheel continues rotating.
Figure 2 is a schematic view of a further preferred embodiment of the mechanism according to the present invention, which is mounted on a railway section, wherein a train wheel passing above the half-cylindrical axle causes it to drive a flywheel. It should be noted that no upward or downward sections are used here.
Figure 3 shows an additional embodiment of the mechanism of the present invention, wherein a vehicle is located at position B in Figure 1, as seen from the front (I) and from the back (II). The mechanism illustrated herein comprises two flywheels respectively mounted on both ends of the half-cylindrical axle.

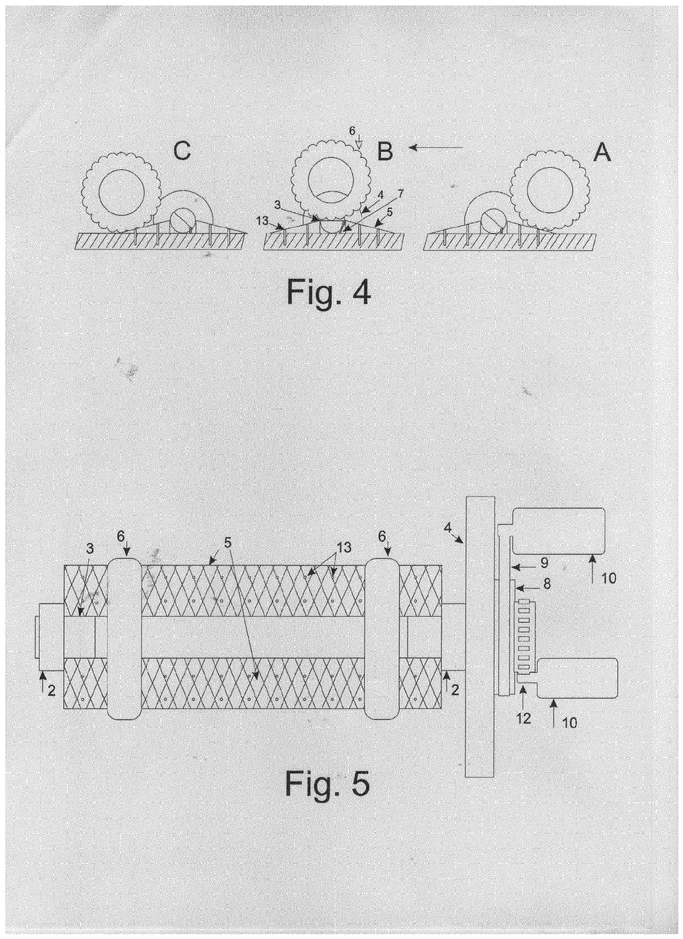

Figure 4 is a schematic view of the A-B section of Figure 3 (1) shown on each of the stages (A, B y C) of Figure 1 from right to left, as the vehicle wheels passes on and drives the half-cylindrical axle. Position A shows the mechanism in its resting position, that is, subject to no load; position B shows the mechanism in active position, that is, under load, while position C shows the mechanism once again in its resting position, without load, after the vehicle wheels have passed and both the half-cylindrical axle and the attached flywheel are set in motion.
Figure 5 is a plan view of the mechanism according to the present invention, shown schematically at stage B in Figure 1. The main parts of said mechanism are shown, namely: (1) support section, (2) bearing or anti-friction bands, (3) main axle (4) flywheel (freewheel) transmitting load in only one direction, while it can rotate freely in the opposite direction, (5) upward and downward platforms, (6) vehicle wheel, (7) springs, (8) pulley, (9) belt, (10) generator (alternator o dynamo), (11) road surface, (12) gearwheel, y (13) fixing supports.

### V - Detailed description of the invention

The present invention refers to a system intended to collect kinetic energy from passing vehicles and transmitting it to a flywheel by means of a half-cylindrical axle, then converting the mechanical energy in the flywheel to electric power by means of an alternator or a dynamo, and delivering it to a power network or to batteries.

This invention related to the generation of power from moving vehicles differs from any other system because it comprises a half-cylindrical axle which is driven by vehicles passing thereabove, thus collecting the kinetic energy from passing vehicles in the axle flywheel.

These features allow for almost no maintenance needs, a very simple and non-invasive installation, since the system comprises few components, and besides the road on railway need not be modified to install it.

Therefore, the present invention is directed to a kinetic energy collector mechanism for generating electric power from passing vehicles, using a main axle (3) connected to a flywheel (4), wherein the main axle (3) is supported on two bearings (2) and/or rollers mounted across the path of a vehicle, wherein said main axle has a half-cylindrical cross section at the support section (1) of the main axle (3).for the vehicle wheel (6).

When the wheel of the vehicle runs over the main axle (3) it causes it to rotate by 1/8th of a turn, driving the flywheel or freewheel (4) that is attached to one or both ends of the main axle, transmitting the load in only one direction, (while it can rotate freely in the opposite direction), with enough driving force to make the flywheel rotate freely and drive generator, dynamo and/or alternator, with its corresponding regulator (10) by mechanical means, such as pulleys and belts (8, 9) and/or gears (12), thus transmitting the load to the dynamo and/or alternator and its corresponding regulator (10), which in turn produce electric power to be delivered to a power network or to charge batteries.

The main axle (3) is then returned to its original resting position by means of springs (7), and repeating the rotational movement each time the main axle is actuated by a passing wheel.

In the case of a road for motor vehicles, the mechanism is supported between two platforms (5) with upward or downward inclination respectively, and is mounted by means of a simple attachment system to the road surface (13).

In the case of a railway, the mechanism does not have an upward and downward inclination, i.e. has no platforms, but the mechanism is also attached to the ground surface (13).

## Claims

1. A kinetic energy collector mechanism for generating electric power from passing vehicles, comprising a main axle (3) connected to a flywheel (4) and supported on two bearings and/or rollers (2), said main axle adapted to rotate in an angle ranging between 0°and 120° as the vehicle wheels (6) pass over the main axle (3) thus driving the attached flywheel (4);
wherein the main axle (3) is returned to its original resting position by means of springs (7); and
wherein the flywheel is configured to drive a generator (10) by mechanical means transmitting the load to said generator (10), which in turn generates electric power that is either delivered to a power network or charged in batteries; and
wherein the flywheel (4) is mounted so as to transmit load in only one direction and to rotate freely in the opposite direction;
**characterized in that** the main axle (3) has a half-cylindrical section, the flat side of which is arranged so that the vehicle wheels (6) step thereon;
and **in that** the flywheel (4) is attached to an end of the main axle (3).

2. The kinetic energy collector mechanism of claim 1, wherein the main axle (3) is configured to rotate an angle of 45º.

3. The kinetic energy collector mechanism of any of the preceding claims, wherein the main axle (3) is connected to an additional flywheel (4) at its other end.

4. The kinetic energy collector mechanism of any of the preceding claims, **characterized in that** the generator is a dynamo, an alternator, or a combination thereof.

5. The kinetic energy collector mechanism of any of the preceding claims, **characterized in that** the mechanical means transmitting the load are belt and pulley systems (8, 9), gears (12), or a combination thereof.

6. The kinetic energy collector mechanism of any of the preceding claims, **characterized in that** it is mounted on a street or road with the main axle (3) located between two platforms (5) with an upward or downward inclination respectively, and fixed to the road surface (13).

7. The kinetic energy collector mechanism of any of the preceding claims, **characterized in that** it is mounted on a railway section.

## Patentansprüche

1. Kollektormechanismus für kinetische Energie zum Erzeugen von elektrischer Energie aus vorbeifahrenden Fahrzeugen, umfassend eine Hauptachse (3), die mit einem Schwungrad (4) verbunden und auf zwei Lagern und/oder Rollen (2) abgestützt ist, wobei die Hauptachse so ausgelegt ist, dass sie sich in einem Winkel zwischen 0° und 120° dreht, wenn die Fahrzeugräder (6) über die Hauptachse (3) laufen, wodurch das angebrachte Schwungrad (4) angetrieben wird;
wobei die Hauptachse (3) mittels Federn (7) in ihre ursprüngliche Ruheposition zurückgeführt wird; und
wobei das Schwungrad ausgebildet ist, um einen Generator (10) durch mechanische Mittel anzutreiben, wobei die Last auf den Generator (10) übertragen wird, der wiederum elektrische Energie erzeugt, die entweder an ein Stromnetz geliefert oder in Batterien geladen wird; und
wobei das Schwungrad (4) so montiert ist, dass es die Last in nur eine Richtung überträgt und sich frei in die entgegengesetzte Richtung dreht;
**dadurch gekennzeichnet, dass** die Hauptachse (3) einen halbzylindrischen Abschnitt aufweist, dessen flache Seite so angeordnet ist, dass die Fahrzeugräder (6) darauf fahren;
und dass das Schwungrad (4) an einem Ende der Hauptachse (3) befestigt ist.

2. Der Kollektormechanismus für kinetische Energie nach Anspruch 1, wobei die Hauptachse (3) ausgebildet ist, um einen Winkel von 45° zu drehen.

3. Der Kollektormechanismus für kinetische Energie eines der vorhergehenden Ansprüche, wobei die Hauptachse (3) mit einem zusätzlichen Schwungrad (4) an seinem anderen Ende verbunden ist.

4. Der Kollektormechanismus für kinetische Energie eines der vorhergehenden Ansprüche, **dadurch gekennzeichnet, dass** der Generator ein Dynamo, eine Lichtmaschine oder eine Kombination davon ist.

5. Der Kollektormechanismus für kinetische Energie eines der vorhergehenden Ansprüche, **dadurch gekennzeichnet, dass** die mechanischen Mittel, die die Last übertragen, Riemen- und Rollensysteme (8, 9), Zahnräder (12) oder eine Kombination derselben sind.

6. Der Kollektormechanismus für kinetische Energie eines der vorhergehenden Ansprüche, **dadurch gekennzeichnet, dass** er auf einer Straße oder Fahrbahn montiert ist, wobei die Hauptachse (3) zwischen zwei Plattformen (5) jeweils mit einer Neigung nach oben oder nach unten angeordnet und an der Fahrbahnoberfläche (13) befestigt ist.

7. Der Kollektormechanismus für kinetische Energie eines der vorhergehenden Ansprüche, **dadurch gekennzeichnet, dass** er auf einem Eisenbahnabschnitt montiert ist.

## Revendications

1. Mécanisme collecteur d'énergie cinétique pour la génération de courant électrique à partir du passage de véhicules, comprenant un essieu principal (3) raccordé à un volant d'inertie (4) et supporté sur deux paliers et/ou galets (2), ledit essieu principal étant adapté pour pivoter sur un angle compris entre 0° et 120° tandis que les roues du véhicule (6) passent sur l'essieu principal (3) entraînant donc le volant d'inertie relié (4) ;
dans lequel l'essieu principal (3) retourne à sa position de repos originale au moyen de ressorts (7) ; et
dans lequel le volant d'inertie est configuré pour entraîner un générateur (10) par des moyens mécaniques transmettant la charge audit générateur (10), qui génère à son tour un courant électrique qui est soit délivré à un réseau électrique soit chargé dans des batteries ; et
dans lequel le volant d'inertie (4) est monté de sorte à transmettre une charge dans un seul sens et pour pivoter librement dans le sens opposé ;
**caractérisé en ce que** l'essieu principal (3) a une section semi-cylindrique, dont le côté plat est disposé de sorte que les roues du véhicule (6) montent dessus ;
et **en ce que** le volant d'inertie (4) est relié à une extrémité de l'essieu principal (3).

2. Mécanisme collecteur d'énergie cinétique selon la revendication 1, dans lequel l'essieu principal (3) est configuré pour pivoter un angle de 45°.

3. Mécanisme collecteur d'énergie cinétique selon l'une quelconque des revendications précédentes, dans lequel l'essieu principal (3) est raccordé à un volant d'inertie supplémentaire (4) à son autre extrémité.

4. Mécanisme collecteur d'énergie cinétique selon l'une quelconque des revendications précédentes, **caractérisé en ce que** le générateur est une dynamo, un alternateur, ou une combinaison de ces derniers.

5. Mécanisme collecteur d'énergie cinétique selon l'une quelconque des revendications précédentes, **caractérisé en ce que** les moyens mécaniques transmettant la charge sont des systèmes à courroie et poulie (8, 9), des pignons (12), ou une combinaison de ces derniers.

6. Mécanisme collecteur d'énergie cinétique selon l'une quelconque des revendications précédentes, **caractérisé en ce qu'**il est monté sur une rue ou route avec l'essieu principal (3) situé entre deux plateformes (5) avec une inclinaison vers le haut ou vers le bas respectivement, et fixé à la surface de la route (13).

7. Mécanisme collecteur d'énergie cinétique selon l'une quelconque des revendications précédentes, **caractérisé en ce qu'**il est monté sur un tronçon ferroviaire.
